# EUROPEAN PATENT SPECIFICATION

(11) **EP 2 376 698 B1**
(45) Date of publication and mention of the grant of the patent: **07.11.2012**
(21) Application number: 09752823.6
(22) Date of filing: 17.11.2009
(51) Int. Cl.: A47L 15/00, A47L 15/42, D06F 33/02, D06F 39/08

(54) **A HOUSEHOLD APPLIANCE WHEREIN THE HEATING OF ITS PUMP MOTOR IS CONTROLLED**
HAUSHALTSGERÄT MIT ÜBERHITZUNGSSCHUTZ FÜR PUMPENMOTOR
APPAREIL MÉNAGER AVEC RÉGULATION DU CHAUFFAGE DE SON MOTEUR DE POMPE

(30) Priority: 03.12.2008 TR 200809319
(43) Date of publication of application: 19.10.2011
(73) Proprietor: Arçelik Anonim Sirketi, 34950 Istanbul (TR)
(72) Inventor: BUYUKTOPCU, Cagatay, 34950 Istanbul (TR); GENCER, Mehtap, 34950 Istanbul (TR); YILMAZ, Namik, 34950 Istanbul (TR)
(86) International application number: PCT/EP2009/065265
(87) International publication number: WO 2010/063564

(56) References cited:
- EP-A1- 0 702 103
- EP-A2- 1 284 540
- JP-A- 11 019 393
- JP-A- 2001 009 189
- US-A- 4 584 623
- US-A1- 2002 093 306

## Description

The present invention relates to a household appliance, wherein the pump used in washing and/or drying processes, in water circulation or discharge is prevented from overheating.

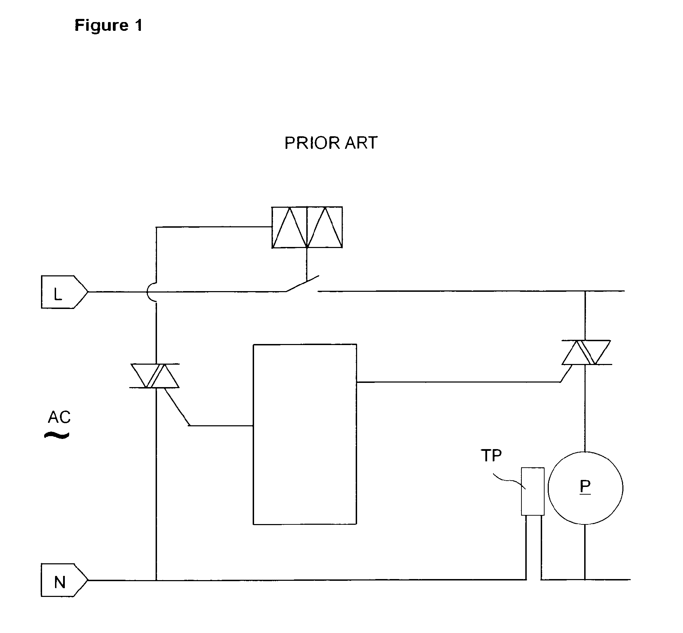

In household appliances, for example in washing machines and/or dryers or dishwashers, discharge pumps providing the water to be evacuated at the end of the washing/drying process are used. The discharge pumps are operated by an electric motor that is fed with alternating current (AC) received from the power source, if the pump motor is exposed to direct current (DC) due to any reason, the motor windings overheat and can cause a fire. In the prior art, the protection of the windings of the pump (P) motor from direct current (DC) and the prevention of them from overheating are provided by the safety element named as thermal protector (TP) (Figure 1). The thermal protector (TP) is situated on the winding of the pump (P) motor or on any place where it can detect the heat and is connected in series to the motor winding and thus, stops the operation of the pump motor by cutting off the current flowing thereon in the event of overheating and/or excessive rise in the current. Since the thermal protector is a component with high labor cost, the need of controlling the overheating of the pump motor without thermal protector occurs.

The electric motors of synchronous type and operating with alternating current (AC) are generally driven by a triac which is controlled by microprocessor, which provides the motor windings to be energized and performs AC switching. In the event of a failure such as open circuit or short circuit particularly in the operation of the triac, the electric motors do not operate at all or operate constantly; however said triac failures are not failures that can cause an electric motor to overheat and burn out. In some cases, although it is not faulty, the triac can be detected as faulty by the microprocessor.

In the European Patent No EP0702103, in a washing machine, the driving motor of the rotating drum and the safety door interlock arrangement are controlled by triac and when the microprocessor detects a short-circuit condition in the triac, it cuts off the energy supply to the drum driving motor and unlock the door lock.

In the Japanese Patent Application No JP2001009189, in a washing machine, when a short condition is detected in the triacs that control the operation of the drum driving motor in forward and reverse directions, the washing machine is stopped.

The Japanese Patent Application No JP 11 019393 A discloses a washing machine which can detect electric current without delay.

The United States Patent Application No US 2002/093306 A1 discloses a method and apparatus for controlling an electric motor pump.

The aim of the present invention is the realization of a household appliance, wherein the pump used in water circulation or discharge in washing and/or drying processes, is prevented from overheating without thermal protector.

The household appliance realized in order to attain the aim of the present invention is explicated in the claims.

The household appliance is a laundry washer/dryer or a dishwasher, comprises at least one pump providing the water to be circulated or discharged in washing and/or drying processes, and a pump triac operating under the control of the microprocessor provides the pump motor to be driven with the alternating current received from the power source. In the embodiment of the present invention, the microprocessor controlling the operation of the household appliance detects whether the pump triac is faulty according to the lower and the upper values of the square wave-shaped voltage signal it receives by means of a feedback circuit connected between the pump triac and the microprocessor and consisting of electronic circuit elements such as resistor, and if it detects a diode mode failure in the pump triac, it decides that the pump motor is overheated and cuts off the current feeding the pump. When the microprocessor detects the triac diode mode failure, it cuts off the energy supply to pump, as well as to the other elements such as heater, drum motor and fan motor operating with electric energy in the household appliance, and brings the household appliance to the stop position.

In an embodiment of the present invention, when the microprocessor detects the diode mode failure in the pump triac, it stops the household appliance but does not change it to the malfunction- mode and after a certain time period, for example if the pump motor is heated, at the end of the time period required for the cooling of the pump motor, it allows the household appliance to reoperate. Thus, if the triac is in reality not faulty and detected as faulty by the microprocessor due to any reason, the household appliance is prevented from being unnecessarily changed to the malfunction- mode and the service is prevented from being called.

In an embodiment of the present invention, the household appliance is a washing machine and comprises a door lock controlled by the microprocessor, preventing the door from being opened by being locked during washing and allowing the door to be opened at the end of the washing process, and the door lock is driven by a door lock triac. In this embodiment, when the microprocessor detects diode mode failure in the pump triac, it unlocks the door lock by giving a command to the door lock triac and when the door lock is unlocked, provides the current flowing to the pump, which receives its energy through the door lock, to be cut off. When the microprocessor detects the diode mode failure in the pump triac, it stops the operation of the pump, as well as of the drum motor and the heater, which receive their energy through the door lock, by giving a command to the door lock triac.

In the household appliance of the present invention, since the heating control of the pump motor is performed directly by the software stored in the microprocessor, use of thermal protector is not required and cost advantage is provided. In the event of the pump triac, which drives the pump motor, being detected as faulty due to factors such as power source voltage irregularity, noise and heat although in reality it is not faulty, the household appliance is prevented from unnecessarily passing to the malfunction-mode and the service is prevented from being called.

The household appliance realized in order to attain the aim of the present invention is illustrated in the attached figures, where:
Figure 1 - is the schematic view of the control circuit of a household appliance in the prior art.
Figure 2 - is the schematic view of the household appliance control circuit of the present invention.
Figure 3 - is the schematic view of the control circuit of the household appliance in another embodiment of the present invention.

The elements illustrated in the figures are numbered as follows:
I - Household appliance
2 - Pump
3 - Pump triac
4 - Feedback circuit
5 - Microprocessor
6 - Door lock
7 - Door lock triac
8 - Drum motor
9 - Drum motor triac
10 - Heater
11 - Heater relay

The household appliance (1) comprises at least one pump (2) used in circulation or discharge of the water in washing and/or drying processes, a pump triac (3) providing the pump (2) motor to be driven with alternating current (AC) that is received from the power source, and a microprocessor (5) directing the operation of all elements.

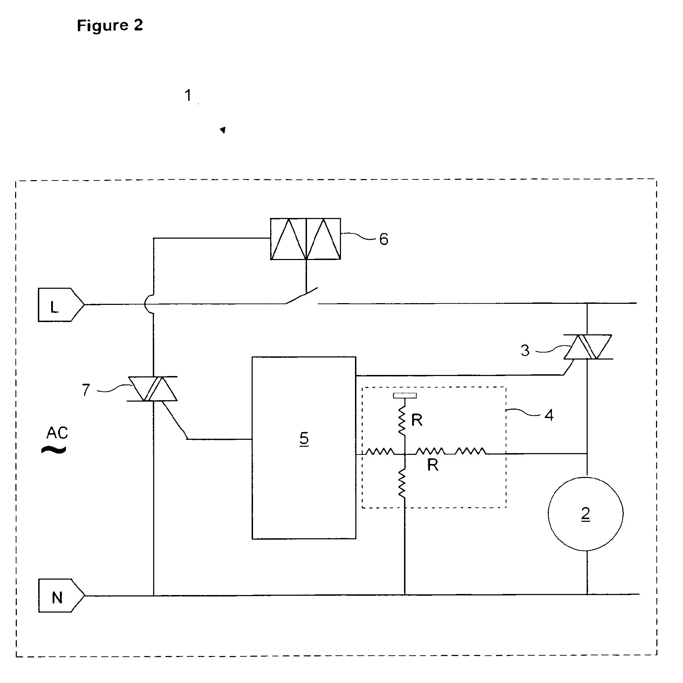

The household appliance (1) of the present invention comprises a feedback circuit (4) that is connected between the pump triac (3) and the microprocessor (5), and that has elements such as resistor (R), and a microprocessor (5) that detects whether the pump triac (3) is faulty according to the change at the upper and the lower voltage values, between which the square wave-shaped voltage signal it received from the feedback circuit (4) oscillates, and by detection of a diode mode failure in the pump triac (3), that decides that the pump motor is overheated and cuts off the current feeding the pump (2) and stops the operation of the pump (2) or together with the pump (2), of the other elements operating with electric energy in the household appliance (1) (Figure 2).

When diode mode failure occurs, the pump triac allows only the positive or only the negative alternances (half-waves) of the current received from the power source to pass and therefore, causes the pump to be driven with direct current (DC). Since the pump is designed such that it will be driven with alternating current (AC), it is fed with direct current (DC) when diode mode failure occurs, and since the windings of the pump motor cannot carry direct current (DC), they start heating rapidly and as soon as the microprocessor detects that the pump triac is operating with diode mode failure, it cuts off the current immediately and stops the operation of the pump and of the other elements.

In the state of the art, while user safety is provided by means of thermal protector, in the household appliance (1) of the present invention, user safety is provided only by the software in the microprocessor (5) without using thermal protector and thus, cost advantage is provided.

In an embodiment of the present invention, as soon as the microprocessor (5) detects the diode mode failure in the pump triac (3), it keeps the household appliance (1) in the stop condition throughout the time period (T) predetermined for the cooling of the pump motor (2), for example a time period (T) of 10 minutes and allows the household appliance (1) to reoperate only after this time period (T) is completed. In some cases, the pump triac (3) can be detected as faulty by the microprocessor (5) due to effects such as power source voltage irregularity, noise or heat although in reality it is not faulty, and the operation of the household appliance (1) is stopped by cutting off the current that flows to the pump (2) and to the other elements. In the prior art, after the software stops the operation, intervention of service is required for reoperation, whereas in the embodiment of the present invention, since the software allows reoperation, intervention of service is not required.

In another embodiment of the present invention, after detecting diode mode failure in the pump triac (3) and waiting for a certain time period (T) that follows the failure detection, the microprocessor (5) enables the household appliance (1) to resume operating.

In an embodiment of the present invention, after detecting diode mode failure in the pump triac (3) and waiting for a certain time period (T) that follows the failure detection, the microprocessor (5) provides the user to be warned for example by sound or a flashing LED and thus, indicates that the household appliance (1) is ready to be restarted, and the household appliance (1) is reoperated by the user.

In another embodiment of the present invention, after detecting diode mode failure in the pump triac (3) and waiting for a certain time period (T) that follows the failure detection, the microprocessor (5) allows the user to perform maximally a certain number (n), for example maximal 2 or 3 times, of attempts for reoperating. If the pump triac (3) is in reality faulty, since it cannot be expected to be fixed automatically, the same failure will continue in the attempts for operating following the waiting time period (T). After the user has performed a certain number (n) of attempts, the microprocessor (5) does not allow further attempts, changes the household appliance (1) to the malfunction-mode, and in this case, the service has to be called.

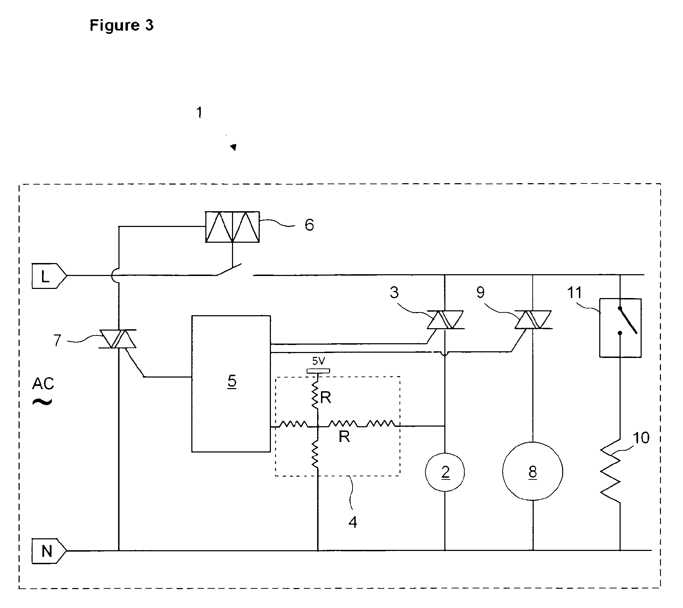

In an embodiment of the present invention, the household appliance (1) has the feature of washing laundry and comprises a drum wherein laundry is emplaced, a door allowing access to the drum, a door lock (6) controlled by the microprocessor (5), preventing the door from being opened by being locked during washing and allowing the door to be opened at the end of the washing process, a door lock triac (7) providing the door lock (6) to be driven with alternating current (AC), a drum motor (8) providing the drum to be rotated, a drum motor triac (9) driving the drum motor (8), a heater (10) providing the washing water to be heated and a heater relay (11) providing the heater (10) to be turned on and off (Figure 3).

In this embodiment, the energy of the pump (2) flows through the door lock (6) and when the microprocessor (5) detects diode mode failure in the pump triac (3) by means of the feedback circuit (4), it unlocks the door lock (6) by giving command to the door lock triac (7), and when the door lock (6) is unlocked, the current flowing to the pump (2), which receives its energy through the door lock (6), is cut off.

In this embodiment, since the current operating the drum motor (8) and the heater (10) as well as the pump (2) also flows through the door lock (6), when the microprocessor (5) detects diode mode failure in the pump triac (3), it stops the operation of the pump (2), as well as of the drum motor (8) and the heater (10), which receive their energy through the door lock (6). As soon as the microprocessor (5) detects diode mode failure in the pump triac (3) and therefore, unlocks the door lock (6), the drum motor triac (9) stops the operation of the drum motor (8) by cutting off the current flowing thereto, and also the heater relay (11) stops the operation of the heater (10) by cutting off the current flowing thereto.

In the household appliance (1) of the present invention, since the heating control of the pump (2) motor is performed directly by the software stored in the microprocessor (5), use of thermal protector is not required and cost advantage is provided. In the event of the pump triac (3), which drives the pump (2) motor, being detected as faulty due to factors such as power source voltage irregularity, noise and heat although in reality it is not faulty, the household appliance (1) is prevented from unnecessarily passing to the malfunction-mode and the service is prevented from being called.

It is to be understood that the present invention is not limited to the embodiments disclosed above and a person skilled in the art can easily introduce different embodiments as long as they fall within the scope of the protection defined by the claims of the present invention.

## Claims

1. - A household appliance (1) **comprising** at least one pump (2) that is used in circulation or discharge of the water in washing and/or drying processes, a pump triac (3) that provides the pump (2) motor to be driven with alternating current (AC) received from the power source, a microprocessor (5), and
a feedback circuit (4) that is connected between the pump triac (3) and the microprocessor (5), and that has elements such as resistor (R), **characterized by** the microprocessor (5) that is configured to detect whether the pump triac (3) allows only the positive or only the negative half-waves of the alternating current received from the power source to pass, namely to detect a diode mode failure of the pump triac (3), according to the change at the upper and the lower voltage values between which the square wave-shaped voltage signal it received from the feedback circuit (4) oscillates, and to decide that the pump (2) motor is overheated and cut off the AC current feeding the pump (2) by detection of said diode mode failure in the pump triac (3).

2. - A household appliance (1) as in Claim 1, **characterized by** the microprocessor (5) that is configured to enable to resume operating the household appliance (1) after detecting diode mode failure in the pump triac (3) and waiting for a predetermined time period (T) that follows the failure detection.

3. - A household appliance (1) as in Claim 1 and 2, **characterized by** the microprocessor (5) that is configured to provide the user to be warned and indicate that the household appliance (1) is ready to be restarted, after detecting diode mode failure in the pump triac (3) and waiting for predetermined time period (T) that follows the failure detection.

4. - A household appliance (1) as in Claim 1 and 2, **characterized by** the microprocessor (5) that is configured to allow the user to perform maximally a certain number (n) of attempts for re-operating, after detecting diode mode failure in the pump triac (3) and waiting for a certain time period (T) that follows the failure detection.

5. - A household appliance (1) as in any one of the above Claims, **characterized by**
- a drum wherein laundry is emplaced, a door which provides access to the drum, a door lock (6) which is controlled by the microprocessor (5), and which prevents the door from being opened by being locked during washing and allows the door to be opened at the end of the washing process, a door lock triac (7) which provides the door lock (6) to be driven with alternating current (AC), a drum motor (8) which provides the drum to be rotated, a heater (10) which provides the washing water to be heated
and
- the microprocessor (5) which is configured to unlock the door lock (6) by giving command to the door lock triac (7) by detection of diode mode failure in the pump triac (3) and provide the current flowing to the pump (2) that receives its energy through the door lock (6) to be cut off when the door lock (6) is unlocked.

6. - A household appliance (1) as in Claim 5, **characterized by** the microprocessor (5) which is configured to stop the operation of the pump (2), as well as of the drum motor (8) and the heater (10) that receive their energy through the door lock (6) by giving command to the door lock triac (7) by detection of the diode mode failure in the pump triac (3).

## Patentansprüche

1. - Haushaltsgerät (1), **umfassend** wenigstens eine Pumpe (2), die bei der Zirkulation oder beim Ablassen von Wasser in Wasch- und/oder Trockenprozessen benutzt wird, ein Pumpen-Triac (3), das dafür sorgt, dass der Motor der Pumpe (2) mit Wechselstrom (AC) angetrieben wird, den er von der Stromquelle erhält, einen Mikroprozessor (5) und einen Rückkoppelungsschaltkreis (4), der zwischen dem Pumpen-Triac (3) und dem Mikroprozessor (5) verbunden ist und Elemente wie etwa einen Widerstand (R) aufweist, **dadurch gekennzeichnet, dass** der Mikroprozessor (5) dazu konfiguriert ist, zu erkennen, ob das Pumpen-Triac (3) nur die positiven oder nur die negativen Halbwellen des Wechselstroms von der Stromquelle durchlässt, und also entsprechend der Änderung der oberen und unteren Spannungswerte, zwischen denen ein vom Rückkoppelungsschaltkreis (4) empfangenes Rechteckspannungssignal oszilliert, einen Diodenmodusfehler des Pumpen-Triacs (3) zu erkennen, und zu entscheiden, dass der Motor der Pumpe (2) überhitzt ist, und den Wechselstrom zu unterbrechen, der die Pumpe (2) versorgt, indem er den Diodenmodusfehler im Pumpen-Triac (3) erkennt.

2. - Haushaltsgerät (1) nach Anspruch 1, **dadurch gekennzeichnet, dass** der Mikroprozessor (5) dazu konfiguriert ist, die Wiederaufnahme des Betriebs des Haushaltsgeräts (1) zu ermöglichen, nachdem er einen Diodenmodusfehler im Pumpen-Triac (3) erkannt hat, und für eine vorbestimmte Zeitdauer (T) nach der Fehlererkennung zu warten.

3. - Haushaltsgerät (1) nach Anspruch 1 und 2, **dadurch gekennzeichnet, dass** der Mikroprozessor (5) dazu konfiguriert ist, eine Warnung an den Benutzer bereitzustellen und anzuzeigen, dass das Haushaltsgerät (1) bereit für einen Neustart ist, nachdem er den Diodenmodusfehler im Pumpen-Triac (3) erkannt hat, und für eine vorbestimmte Zeitdauer (T) nach der Fehlererkennung zu warten.

4. - Haushaltsgerät (1) nach Anspruch 1 und 2, **dadurch gekennzeichnet, dass** der Mikroprozessor (5) dazu konfiguriert ist, dem Benutzer maximal eine bestimmte Anzahl (n) von Versuchen zum erneuten Inbetriebnehmen zu gestatten, nachdem er einen Diodenmodusfehler im Pumpen-Triac (3) erkannt hat, und für eine vorbestimmte Zeitdauer (T) nach der Fehlererkennung zu warten.

5. - Haushaltsgerät (1) nach einem der vorangehenden Ansprüche, **gekennzeichnet durch**:
- eine Trommel, in die Wäsche gegeben wird, eine Tür, die Zugriff auf die Trommel bietet, eine Türverriegelung (6), die vom Mikroprozessor (5) gesteuert wird und verhindert, dass die Tür geöffnet wird, indem sie während des Waschens verriegelt ist, und zulässt, dass die Tür nach dem Ende des Waschvorgangs geöffnet wird, ein Türverriegelungs-Triac (7), das dafür sorgt, dass die Türverriegelung (6) mit Wechselstrom (AC) betrieben wird, einen Trommelmotor (8), der dafür sorgt, dass die Trommel gedreht wird, eine Heizeinrichtung (10), die dafür sorgt, dass das Waschwasser erwärmt wird
und
- den Mikroprozessor (5), der dazu konfiguriert ist, die Türverriegelung (6) zu entriegeln, indem er dem Türverriegelungs-Triac (7) einen Befehl erteilt, indem er einen Diodenmodusfehler im Pumpen-Triac (3) erkennt, und dafür sorgt, dass der Strom, der zur Pumpe (2) fließt, die ihre Energie über die Türverriegelung (6) erhält, unterbrochen wird, wenn die Türverriegelung (6) entriegelt wird.

6. - Haushaltsgerät (1) nach Anspruch 5, **dadurch gekennzeichnet, dass** der Mikroprozessor (5) dazu konfiguriert ist, den Betrieb der Pumpe (2) sowie des Trommelmotors (8) und der Heizeinrichtung (10) zu unterbrechen, die ihre Energie von der Türverriegelung (6) erhalten, indem er dem Türverriegelungs-Triac (7) einen Befehl erteilt, indem er einen Diodenmodusfehler im Pumpen-Triac (3) erkennt.

## Revendications

1. - Un électroménager (1) **comprenant** au moins une pompe (2) qui est utilisée pour la circulation ou l'évacuation de l'eau dans les processus de lavage et/ou séchage, un triac de pompe (3) qui permet au moteur de la pompe (2) d'être actionnée par un courant alternatif (AC) reçu de la source d'alimentation, un microprocesseur (5), et un circuit de rétroaction (4) qui est relié entre le triac de pompe (3) et le microprocesseur (5), et qui a des éléments comme la résistance (R), **caractérisé par** le microprocesseur (5) qui est configuré de manière à détecter si la triac de pompe (3) ne permet que aux demi-ondes positives ou négatives du courant alternatif reçu de la source d'alimentation de passer, à savoir à détecter une panne de mode diode du triac de pompe (3), selon le changement entre les valeurs de tension supérieures et inférieures entre lesquelles le signal de tension d'onde carrée qu'il a reçu du circuit de rétroaction (4) oscille, et à décider que le moteur de la pompe (2) chauffe et couper le courant alternatif fournissant la pompe (2) par la détection de ladite panne de mode diode dans le triac de pompe (3).

2. - Un électroménager (1) selon la Revendication 1, **caractérisé par** le microprocesseur (5) qui est configuré de manière à reprendre le fonctionnement de l'électroménager (1) après qu'il détecte la panne de mode diode dans le triac de pompe (3) et attend pendant un temps prédéterminé (T) qui suit la détection de la panne.

3. - Un électroménager (1) selon la Revendication 1 ou 2, **caractérisé pa**r le microprocesseur (5) qui est configuré de manière à avertir l'utilisateur et indiquer que l'électroménager (1) est prêt à être redémarré après qu'il détecte la panne de mode diode dans le triac de pompe (3) et attend pendant un temps prédéterminé (T) qui suit la détection de la panne.

4. - Un électroménager (1) selon la Revendication 1 ou 2, **caractérisé par** le microprocesseur (5) qui est configuré de manière à permettre à l'utilisateur d'effectuer un certain nombre maximum (n) de tentatives pour le redémarrage, après qu'il détecte la panne de mode diode dans le triac de pompe (3) et attend pendant un temps prédéterminé (T) qui suit la détection de la panne.

5. - Un électroménager (1) selon l'une quelconque des revendications précédentes, **caractérisé par**
- un tambour dans lequel le linge est placé, une porte qui permet l'accès au tambour, une serrure de porte (6) qui est contrôlée par le microprocesseur (5), et qui empêche la porte d'être ouverte en la verrouillant pendant le lavage et qui permet à la porte d'être ouverte à la fin du processus de lavage, un triac de la serrure de porte (7) qui permet à la serrure de porte (6) d'être actionnée par le courant alternatif (AC), un moteur de tambour (8) qui permet la rotation du tambour, un dispositif de chauffage (10) qui permet à l'eau de lavage d'être chauffée
et
- le microprocesseur (5) qui est configuré de manière à déverrouiller la serrure de porte (6) en donnant une commande au triac de la serrure de porte (7) par la détection de la panne de mode diode dans le triac de pompe (3) et à couper le courant circulant vers la pompe (2) qui reçoit son énergie par l'intermédiaire de la serrure de porte (6) lorsque la serrure de porte (6) est déverrouillée.

6. - Un électroménager (1) selon la Revendication 5, **caractérisé par** le microprocesseur (5) qui est configuré de manière à arrêter le fonctionnement de la pompe (2) et du moteur de tambour (8) et du dispositif de chauffage (10) aussi, qui reçoivent leur énergie à travers la serrure de porte (6) en donnant une commande au triac de la serrure de porte (7) par la détection de la panne de mode diode dans le triac de pompe (3).
